# EUROPÄISCHE PATENTSCHRIFT

(11) **EP 0 689 763 B1**
(45) Veröffentlichungstag und Bekanntmachung des Hinweises auf die Patenterteilung: **21.01.1998**
(21) Anmeldenummer: 95810397.0
(22) Anmeldetag: 14.06.1995
(51) Int. Cl.: A01K 27/00, A01K 13/00

(54) **Rückstrahler für ein Pferd**
Reflector for horses
Réflecteur pour chevaux

(30) Priorität: 28.06.1994 CH 2060/94
(43) Veröffentlichungstag der Anmeldung: 03.01.1996
(73) Patentinhaber: Tegofil AG, 4665 Oftringen (CH); Felix Bühler AG, 5037 Muhen (CH)
(72) Erfinder: Bürki, Beat, CH-4812 Mühletal (CH)
(74) Vertreter: BOVARD AG - Patentanwälte

(56) Entgegenhaltungen:
- EP-A- 0 423 966
- DE-A- 3 802 861
- DE-U- 9 400 254
- US-A- 5 159 802
- US-A- 5 169 702

## Beschreibung

Die vorliegende Erfindung bezieht sich auf einen Rückstrahler für ein Pferd, insbesondere berittenes Pferd gemäss dem Oberbegriff des Patentanspruchs 1.

Ein im Strassenverkehr sich bewegendes Pferd, insbesondere berittenes Pferd, muss für die anderen Verkehrsteilnehmer, insbesondere bei Dunkelheit, von weitem und gut erkennbar sein. Um dies zu gewährleisten, werden neben vom Reiter mitgeführte Lämpchen auch Rückstrahler verwendet, die das von sich nähernden Fahrzeugen ausgestrahlte Licht reflektieren.

Eine bekannte Art von derartigen Rückstrahlern liegen im Form von Manschetten vor, die in geeigneter Weise im Bereich der Fesseln an den Beinen des Pferdes befestigt werden können, wie dies beispielsweise in der US-A-5 169 702 dargestellt ist. Hierbei hat sich gezeigt, dass einerseits die Grösse der reflektierenden Flächen relativ klein sind, und dass andererseits die Höhe über der Strasse, auf welche die Manschetten angebracht sind, eher zu tief und demzufolge nicht optimal ist.

Es sind auch Kleidungsstücke bekannt, beispielsweise in Form von Jacken, die mit Rückstrahlflächen ausgestattet sind und die ein Reiter überziehen kann. Auf derartigen Kleidungsstücken können die Rückstrahlflächen eine Grösse aufweisen, durch welche ein gutes und frühes Erkennen des Reiters mit Pferd erreicht wird, die Erfahrung hat aber gezeigt, dass derartige Kleidungsstücke von Reitern nicht gerne getragen werden.

Die Aufgabe der Erfindung besteht nun darin, einen Rückstrahler zu schaffen, der eine genügend grosse Rückstrahlfläche aufweist, der bei einem Pferd mit Reiter auf einer optimalen Höhe angebracht werden kann, und dessen Tragen weder vom Pferd noch vom Reiter als störend empfunden wird.

Erfindungsgemäss erfolgt die Lösung dieser Aufgabe durch die in der Kennzeichnung des Anspruchs 1 angegebenen Merkmale.

Dieser Rückstrahler kann in optimaler Weise am Schweif des Pferdes befestigt werden und kommt auf eine optimale Höhe zu liegen. Dadurch wird ein frühes und gutes Erkennen des Pferdes für einen Fahrer eines von hinten sich nähernden Fahrzeuges insbesondere bei Dunkelheit gewährleistet. Des weiteren wird das Tragen eines derartigen Rückstrahlers nicht als störend empfunden.

Die Befestigung des Rückstrahlers am Schweif des Pferdes erfolgt dadurch, dass das flexible Band um den Schweif des Pferdes geschlungen wird und mit dem Schliessmechanismus fixiert wird. Das mindestens eine bandförmige Element verläuft dann längs des Schweifes, wodurch eine relativ grosse Rückstrahloberfläche entsteht.

Eine besonders einfache Handhabung des Rückstrahlers ergibt sich, wenn der Schliessmechanismus als Klettenverschluss ausgebildet ist.

In vorteilhafter Weise sind zur Vergrösserung der rückstrahlenden Oberfläche des Rückstrahlers mehrere, nebeneinander verlaufende flexible bandförmige Elemente vorgesehen, die mit jeweils einem Ende am flexiblen Band befestigt sind.

In vorteilhafter Weise sind diese flexiblen bandförmigen Elemente im Bereich ihres anderen Endes an einer Schlaufe befestigt, die ebenfalls aus einem flexiblen bandförmigen Material besteht, und die senkrecht zu den flexiblen bandförmigen Elementen ausgerichtet ist. Durch diese Schlaufe ist der Schweif des Pferdes hindurchführbar, wodurch die flexiblen bandförmigen Elemente in einer längs des Schweifes verlaufenden Lage gehalten werden, und insbesondere bei Wind nicht herumflattern.

Des weiteren kann in vorteilhafter Weise auch die nach aussen gerichtete Oberfläche der Schlaufe mit einer reflektierenden Schicht versehen sein, so dass die Rückstrahloberfläche vergrössert wird, und diese sich auch seitlich nach aussen erstreckt.

In vorteilhafter Weise bestehen die flexiblen bandförmigen Elemente, das Haltemittel und die Schlaufen aus einem aus textilen Fasern bestehendem Gewebe, wodurch insbesondere das Zusammenfügen, beispielsweise durch Nähen, problemlos erfolgen kann.

Eine Ausführungsform der Erfindung wird nachfolgend anhand der beiliegenden Zeichnung beispielhaft näher erläutert.

Es zeigt:
Fig. 1 eine räumliche Darstellung eines erfindungsgemässen Rückstrahlers; und
Fig. 2 den erfindungsgemässen Rückstrahler gemäss Fig. 1 im am Schweif des Pferdes angebrachten Zustand.

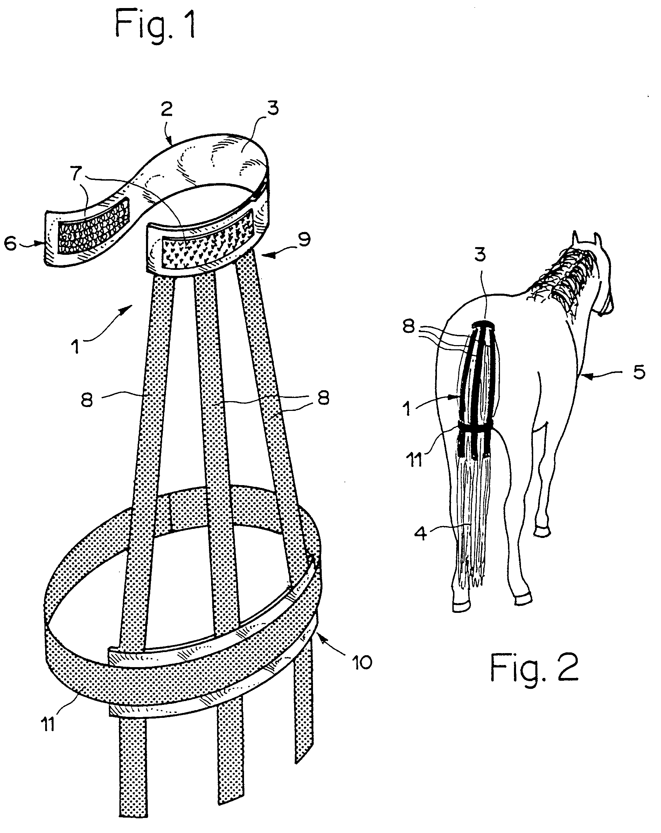

Wie in Fig. 1 dargestellt ist, besteht der Rückstrahler 1 aus einem Haltemittel 2, welches aus einem flexiblen Band 3 besteht, das um den Schweif 4 (Fig. 2) des Pferdes 5 (Fig. 2) geschlungen werden kann. Dieses flexible Band 3 ist mit einem Schliessmechanismus 6 versehen, der als Klettenverschluss 7 ausgebildet ist.

Am flexiblen Band 3 sind drei flexible bandförmige Elemente 8 mit jeweils einem Ende 9 befestigt.

Im Bereich ihres anderen Endes 10 ist an den flexiblen bandförmigen Elementen 8 eine aus bandförmigem Material bestehende Schlaufe 11 angebracht. Diese Schlaufe 11 weist in diesem Ausführungsbeispiel eine geschlossene Form auf und ist so mit den flexiblen bandförmigen Elementen 8 verbunden, dass sie im wesentlichen senkrecht dazu ausgerichtet ist.

Das flexible Band 3, die flexiblen bandförmigen Elemente 8 und die Schlaufe 11 können aus einem aus textilen Fasern bestehenden Gewebe gefertigt sein, die durch Nähen miteinander verbunden sind, und deren nach aussen gerichtete Oberflächen mit einer das auftreffende Licht reflektierenden Schicht versehen sind.

Wie aus Fig. 2 ersichtlich ist, wird das flexible Band 3 des Rückstrahlers 1, das in Längsrichtung elastisch dehnbar ist und so zu einer optimalen Halterung führt, im obersten Endbereich um den Schweif 4 des Pferdes 5 geschlungen und fixiert. Der Schweif 4 wird zudem noch durch die Schlaufe 11 hindurchgeführt. Dadurch verlaufen die flexiblen bandförmigen Elemente 8 in Längsrichtung des Schweifes 4, wobei die mit der reflektierenden Schicht versehenen Oberflächen im wesentlichen nach hinten, aber auch seitlich nach aussen, gerichtet sind. Dadurch sind derartig ausgerüstete Pferde 5 für Fahrer von mit Licht versehenen Fahrzeugen, die sich insbesondere bei Dunkelheit von hinten nähern, in optimaler Weise sichtbar, was eine erhöhte Sicherheit für alle Verkehrsteilnehmer mit sich bringt.

Es ist auch denkbar, dass die Schlaufe 11 ebenfalls mit einem Verschliessmechanismus versehen ist, wie das flexible Band 3, was möglicherweise ein einfacheres Befestigen des Rückstrahlers 1 am Schweif 4 des Pferdes 5 bringen würde.

Des weiteren wäre es auch denkbar, die flexiblen bandförmigen Elemente 8 durch weitere Querbänder miteinander zu verbinden, wobei diese Querbänder ebenfalls als Schlaufen ausgeführt werden könnten, wie die Schlaufe 11.

Mit diesem erfindungsgemässen Rückstrahler 1 wurde ein Mittel geschaffen, welches das Erkennen von Reitpferden in der Dunkelheit für Fahrzeuglenker verbessert und dadurch wesentlich zur Erhöhung der Sicherheit der Verkehrsteilnehmer beiträgt.

## Patentansprüche

1. Rückstrahler für ein Pferd, insbesondere für ein berittenes Pferd, mit einem aus einem flexiblen Band (3) bestehenden Haltemittel (2), das mit einer reflektierenden Schicht versehen und mit einem Schliessmechanismus (6) ausgestattet ist, dadurch gekennzeichnet, dass mit dem flexiblen Band (3) mindestens ein flexibles bandförmiges Element (8) derart verbunden ist, dass zwischen flexiblen Band (3) und bandförmigen Element (8) im wesentlichen ein rechter Winkel besteht, dass das mindestens eine bandförmige Element (8) mit einer reflektierenden Schicht versehen ist und dass das flexible Band (3) mit dem mindestens einen damit verbundenen bandförmigen Element (8) zum lösbaren Befestigen am Schweif (4) des Pferdes (5) bestimmt ist.

2. Rückstrahler nach Anspruch 1, dadurch gekennzeichnet, dass der Schliessmechanismus (6) als Klettenverschluss (7) ausgebildet ist.

3. Rückstrahler nach Anspruch 1 oder 2, dadurch gekennzeichnet, dass mehrere, nebeneinander verlaufende flexible bandförmige Elemente (8) mit jeweils einem Ende (9) am flexiblen Band (3) befestigt sind.

4. Rückstrahler nach Anspruch 3, dadurch gekennzeichnet, dass die flexiblen bandförmigen Elemente (8) gegen den Bereich ihres anderen Endes (10) hin an mindestens einer aus flexiblem, bandförmigem Material bestehenden Schlaufe (11) befestigt sind, die senkrecht zu den flexiblen bandförmigen Elementen (8) ausgerichtet ist.

5. Rückstrahler nach Anspruch 4, dadurch gekennzeichnet, dass mindestens ein Bereich der äusseren Oberfläche der mindestens einen Schlaufe (11), ebenfalls mit einer reflektierenden Schicht versehen ist.

6. Rückstrahler nach einem der Ansprüche 4 oder 5, dadurch gekennzeichnet, dass die flexiblen bandförmigen Elemente (8), das aus dem flexiblen Band (3) bestehende Haltemittel (2) und die Schlaufen (11) aus einem aus textilen Fasern bestehendem Gewebe gefertigt sind.

## Claims

1. Reflector for a horse, in particular for a ridden horse, with a holding means (2) consisting of a flexible band (3), which is provided with a reflecting layer and is equipped with a closing mechanism (6), characterised in that with the flexible band (3) at least one flexible band-shaped element (8) is connected in such a way that between flexible band (3) and band-shaped element (8) there exists an essentially right angle, in that the at least one band-shaped element (8) is provided with a reflecting layer and in that the flexible band (3) with the at least one band-shaped element (8) connected thereto is intended for detachable attachment on the tail (4) of the horse (5).

2. Reflector according to claim 1, characterised in that the closure mechanism (6) is designed as a hook and loop closure (7).

3. Reflector according to claim 1 or 2, characterised in that a plurality of flexible band-shaped elements (8) running side by side are fastened by one end each (9) to the flexible band (3).

4. Reflector according to claim 3, characterised in that the flexible band-shaped elements (8) in the area toward their other end (10) are fastened to at least one loop (11) of flexible band-shaped material, which loop is oriented perpendicular to the flexible band-shaped elements (8).

5. Reflector according to claim 4, characterised in that at least one area of the outer surface of the at least one loop (11) is likewise provided with a reflecting layer.

6. Reflector according to one of the claims 4 or 5, characterised in that the flexible band-shaped elements (8), are made of the holding means (2) consisting of the flexible band (3) and the loops (11) of a fabric of textile fibres.

## Revendications

1. Réflecteur pour chevaux, notamment pour un cheval monté, constitué d'une bande flexible (3) constituant un moyen de support (2), munie d'une couche réfléchissante et d'un mécanisme de fermeture (6), caractérisé en ce qu'au moins un élément flexible (8) est relié à la bande flexible (3) de telle manière que la bande flexible (3) et l'élément flexible (8) forment entre eux un angle essentiellement droit, en ce qu'au moins un élément flexible (8) est muni d'une couche réfléchissante et en ce que la bande flexible (3) avec le ou les éléments flexibles (8) avec le(s)quel(s) elle est reliée est destiné à être fixé à la queue (4) du cheval (5).

2. Réflecteur selon la revendication 1, caractérisé en ce que le mécanisme de fermeture (6) est formé d'une fermeture auto-agrippante (7).

3. Réflecteur selon l'une des revendications 1 ou 2, caractérisé en ce que plusieurs éléments (8) en forme de bandes flexibles disposés côte-à-côte sont fixés chacun par une de leurs extrémités (9) à la bande flexible (3).

4. Réflecteur selon la revendication 3, caractérisé en ce que les éléments (8) en forme de bandes flexibles sont fixés, dans la région de leur autre extrémité (10) à au moins un tirant (11) sous forme d'une bande, constitué en un matériau flexible, disposé perpendiculairement aux éléments (8) en forme de bandes.

5. Réflecteur selon la revendication 4, caractérisé en ce qu'au moins une région de la surface extérieure du ou des tirants (11) est aussi munie d'une couche réfléchissante.

6. Réflecteur selon l'une des revendications 4 ou 5, caractérisé en ce que les éléments (8) en forme de bandes flexibles, la bande flexible (3) constituant le moyen support (2) et les tirants (11) sont constitués d'un tissu de fibres textiles.
